# EUROPÄISCHE PATENTSCHRIFT

(11) **EP 1 356 716 B1**
(45) Veröffentlichungstag und Bekanntmachung des Hinweises auf die Patenterteilung: **15.09.2004**
(21) Anmeldenummer: 01273588.2
(22) Anmeldetag: 01.12.2001
(51) Int. Cl.: H05F 3/02, B29C 70/88

(54) **ELEKTRISCH LEITFÄHIGER BODENBELAG**
ELECTRICALLY-CONDUCTING FLOOR COVERING
REVETEMENT DE SOL ELECTROCONDUCTEUR

(30) Priorität: 31.01.2001 DE 10104488
(43) Veröffentlichungstag der Anmeldung: 29.10.2003
(73) Patentinhaber: Carl Freudenberg KG, 69469 Weinheim (DE)
(72) Erfinder: KÜHL, Hans-Michael, 69439 Hirschberg (DE); GRAAB, Gerhard, 68199 Mannheim (DE); PLATZER, Peter, 69488 Birkenau (DE); MÖLLER, Ralf, 64668 Rimbach (DE)
(86) Internationale Anmeldenummer: PCT/EP2001/014069
(87) Internationale Veröffentlichungsnummer: WO 2002/062110

(56) Entgegenhaltungen:
- EP-A- 0 869 217
- US-A- 5 307 233

## Beschreibung

Die Erfindung betrifft einen elektrisch leitfähigen Bodenbelag.

Statische Aufladungen, die durch das Begehen oder Befahren von Kunststoff-Bodenbelägen, insbesondere bei geringen Luftfeuchtigkeiten hervorgerufen werden, stellen ein ernsthaftes Problem, insbesondere für empfindliche elektronische Bauteile, dar. Die elektronischen Bauteile können durch elektrostatische Entladungen beschädigt oder in ihrer Funktion beeinträchtigt werden. Weiterhin besteht in Bereichen, in denen mit leicht entzündlichen Stoffen gearbeitet wird, die Gefahr, dass diese durch Funkenüberschlag bei statischen Entladungen entzündet werden. Insbesondere in Räumlichkeiten, die klimatisiert sind und damit eine geringe Luftfeuchtigkeit aufweisen, wie Rechenzentren, Fertigungsstätten für elektronische Bauteile und elektronische Geräte, radiologische Einrichtungen, Operationssäle oder anderen Räumen, in denen auf eine staub- und partikelarme Atmosphäre geachtet wird, ist die Vermeidung von statischen Aufladungen wichtig.

Die typischerweise eingesetzten Bodenbeläge, beispielsweise auf der Basis von Polyvinylchlorid oder Gummimischungen, sind Isolatoren. Sie können leitfähig gemacht werden, indem leitfähige Füllstoffe oder antistatische Agenzien eingemischt werden. Allerdings muss zur Erzielung einer ausreichenden Leitfähigkeit eine relativ große Menge typischerweise zwischen 30 und 50 Volumenprozent eines leitfähigen Füllstoffs eingesetzt werden, um eine ausreichende Leitfähigkeit zu erzielen. Als leitfähige Füllstoffe werden insbesondere metallische Materialien, Leitruße oder Graphite eingesetzt, die jedoch bei der notwendigen Menge zu schwarzen oder grauen Produkten führen. Bei der Verwendung von antistatischen Agenzien besteht der Nachteil, dass diese Stoffe sehr stark auf wechselnde Luftfeuchte reagieren und damit die Wirksamkeit stark von den Umgebungsbedingungen abhängig ist.

Aus dem Dokument EP-A 869 217 ist ein Verfahren zur Herstellung von hochverdichtetem, leitfähigem Belagsmaterial aus thermoplastischen Kunststoffen bekannt, bei dem Teilchen des thermoplastischen Kunststoffs, die mit einem eine leitfähige Substanz enthaltenden Überzug versehen sind, unter erhöhter Temperatur und hohem Druck zu einem Block mit leitfähigen Pfaden verpresst und anschließend quer zur Richtung der leitfähigen Pfade in Platten mit der gewünschten Dicke gespalten werden, wobei diese Platten leitfähige Pfade in Richtung ihrer Dicke besitzen. Auf diese Weise werden hellfarbige, leitfähige Bodenbeläge aus thermoplastischem Kunststoff erhalten.

Die Erfindung hat sich die Aufgabe gestellt, einen elektrisch leitfähigen Bodenbelag anzugeben, der maximal 3 Gew.% leitfähige Substanzen enthält.

Erfindungsgemäß wird die Aufgabe durch einen elektrisch leitfähigen Bodenbelag gemäß Anspruch 9 gelöst, bei dem die ersten Partikel aus mindestens einem granulierten Elastomer-Material bestehen und eine Matrix bilden, in der die zweiten Partikel entlang der Partikelgrenzen der ersten Partikel elektrische Leitpfade bilden.

Der erfindungsgemäße Bodenbelag gestattet die Herstellung von Bodenbelägen mit einem unregelmäßigen Muster, welches aus den bei der Herstellung angeschnittenen Leitpfaden besteht. Der erfindungsgemäße elektrisch leitfähige Elastomer-Bodenbelag weist einen elektrischen Durchgangswiderstand gemessen nach IEC 61340 im Bereich von 10⁵ bis 10⁷Ω auf. Weiterhin zeichnet sich der erfindungsgemäße elektrisch leitfähige Elastomer-Bodenbelag durch eine Oberflächengüte aus, die der nicht elektrisch leitfähiger Elastomer-Bodenbeläge entspricht.

Vorzugsweise ist der elektrisch leitfähige Elastomer-Bodenbelag einer, bei dem die Granulatteilchen Siebe mit einer Maschenweite zwischen 2 bis 8 mm passieren. Durch die Größe der Granulatteilchen und damit durch die Anzahl der Leitpfade je Flächeneinheit kann die Leitfähigkeit des Endproduktes eingestellt werden.

Der elektrisch leitfähige Elastomer-Bodenbelag enthält als elektrisch leitfähige zweite Partikel Substanzen wie Ruße, Graphite, Metallpulver oder leitfähig dotierte mineralische Stoffe mit einer Korngröße < 15 µm.

Besonders bevorzugt ist ein elektrisch leitfähiger Elastomer-Bodenbelag, der leitfähig dotierte mineralische Füllstoffe wie mit Antimon-dotiertem Zinnoxid beschichtete Glimmer enthält. Diese Ausführungsform gestattet die Ausbildung farbiger Leitpfade je nach Pigmentierung, im Gegensatz zu den schwarzen Leitpfaden bei der Verwendung von Ruß oder Graphit.

Besonders bevorzugt ist ein elektrisch leitfähiger Elastomer-Bodenbelag, der 0,05 bis 0,8 Gew.% der elektrisch leitfähigen zweiten Partikel enthält. Trotz dieses sehr niedrigen Gehalts an leitfähigen Substanzen werden damit elektrisch leitfähige Elastomer-Bodenbeläge erhalten, die einen elektrischen Durchgangswiderstand in dem vom Anwender gewünschten Bereich besitzen.

Somit sind elektrisch leitende Elastomer-Bodenbeläge mit schwarzen Leitpfaden bei Verwendung von Ruß oder Graphit oder mit bunten Leitpfaden bei Verwendung von beschichteten Glimmern möglich, wie auch dunkel gefärbte Elastomer-Beläge, bei denen die Leitpfade aus optischen Gründen bunt abgesetzt sind durch Verwendung der beschichteten Glimmer und entsprechender Pigmente.

Der erfindungsgemäße elektrisch leitfähige Elastomer-Bodenbelag wird in der Weise hergestellt, dass
a) eine oder mehrere unvulkanisierte Elastomermischungen granuliert,
b) Granulatteilchen, die Siebe mit einer Maschenweite von 2 bis 8 mm passieren, mit leitfähigen Substanzen überzogen,
c) in eine Form eingebracht und in einem ersten Pressvorgang bei einem spezifischen Druck von 5 bis 200 bar und einer Temperatur von 60 bis 120° C verdichtet und anvernetzt,
d) in Bahnen oder Platten aufgespalten sowie
e) in einem zweiten Pressvorgang vulkanisiert
werden.

Das erfindungsgemäße Verfahren gestattet die Herstellung von elektrisch leitfähigen Elastomer-Bodenbelägen, die in ihren Oberflächeneigenschaften mit denen elektrisch nicht leitfähiger Elastomer-Bodenbeläge vergleichbar sind.

Vorzugsweise erfolgt die Herstellung des elektrisch leitfähigen Elastomer-Bodenbelags in der Weise, dass die leitfähigen Substanzen auf die Granulatteilchen aufgetrommelt werden. Dieses Verfahren gestattet eine effektive Belegung der Granulatteilchen mit leitfähigen Substanzen, bei der mit einem geringen Einsatz von leitfähigen Substanzen die von den Anwendern geforderte Leitfähigkeit des Endprodukts erreicht wird.

Vorzugsweise werden die leitfähigen Substanzen in Form einer BindemittelDispersion aufgebracht. Dadurch können zum einen Staubbefastungen vermieden und zum anderen die Festigkeitswerte des Endprodukts verbessert werden.
Besonders bevorzugt wird dazu ein wässriges Latex-Bindemittel eingesetzt. Der Einsatz eines Latex-Bindemittels reduziert durch den Verzicht auf organische Lösungsmittel den Aufwand an Sicherheitsvorkehrungen und die entsprechenden Umweltbelastungen.

Vorteilhafterweise werden verschiedenfarbige, gemusterte oder keilförmig gestreifte Granulatteilchen in statistisch gleichmäßiger Verteilung eingesetzt. Besonders bevorzugt werden dabei hellfarbige Granulatteilchen eingesetzt.

Vorteilhafterweise erfolgt die Vulkanisation im zweiten Pressvorgang bei einer Temperatur von 150 bis 190° C, einem spezifischen Druck von 100 bis 250 bar im Zeitraum von 2 bis 10 Minuten. Die unter diesen Bedingungen vorgenommene Vulkanisation führt zu Endprodukten, deren Oberflächeneigenschaften denen herkömmlicher nicht leitfähiger Elastomer-Bodenbeläge vergleichbar sind.

Die Erfindung wird nachfolgend an zwei Beispielen und einem Vergleichsbeispiel näher erläutert.

### Beispiel 1

Ein Schnecken-Kurzextruder wird mit einer Rohgummimischung beschickt. Der Extruder ist mit einer Lochscheibe versehen, durch die die Rohgummimasse gedrückt und durch Abschlagen der Stränge granuliert wird. Das erhaltene Granulat wird mit einer elektrisch leitfähigen Substanz durch Auftrommeln beschichtet und anschließend in eine, dem Endprodukt entsprechend große, aber um das zwei- oder mehrfach dickere Form gegeben, wobei die Menge an Granulat mit einem kleinen Überschuss von ca. 5 % auf das Volumen der Form abgestimmt ist und bei einer Temperatur von 80° C sowie einem Druck von ca. 100 bar während 0,5 Minuten/mm Enddicke verpresst wird. Danach wird das Material aus der Form entnommen, mittels eines Spaltvorgangs auf die gewünschte Enddicke aufgespalten und in einem zweiten Pressvorgang bei einer Temperatur von ca. 180° C und einem Druck von ca. 200 bar während 4 Minuten bei einer Enddicke von 2 mm in einer entsprechend dicken Form mit glatter oder leicht strukturierter Oberfläche zum Endprodukt verpresst und vulkanisiert. Die Oberfläche des so erhaltenen elektrisch leitfähigen Elastomer-Bodenbelags ist porenarm und frei von Spaltriefen.

### Vergleichsbeispiel

Eine gemäß Beispiel 1 granulierte und beschichtete Rohgummimasse wird bei einer Temperatur von 180° C und einem Druck von ca. 200 bar verdichtet und bis zum Ende der Vulkanisation geführt. Die Aufspaltung der Platte auf das Enddickenmaß führt zu Produkten mit einer Oberfläche, die mit Spaltriefen versehen ist und andere Oberflächenfehler, wie z.B. Poren, aufweist. Diese Oberflächenfehler geben in der Anwendung als Bodenbelag Anlass zu vermehrter Anschmutzung.

### Beispiel 2

Granulate aus einer Rohgummimischung, hergestellt durch Zerkleinern eines Walzfells in einer Schneidmühle bei Raumtemperatur und Begrenzung der Korngröße über einen Siebeinsatz von z.B. 15 mm Lochweite, werden mit einem Ruß-Latex-Gemisch versehen. Dabei werden je 1000 g Granulat, 50 g der Ruß-Latex-Mischung eingesetzt. Das Latex-Gemisch besteht aus 32,9 g eines Nitril-Butadien-Rubbers (NBR)-Latices mit einem Feststoffgehalt von 47,5 Gew.%, 15,6 g einer 25 Gew.%igen Dispersion eines elektrisch leitenden Rußes in Wasser und 1,5 g eines Gemischs bestehend aus Vernetzungschemikalien wie Schwefel, Zinkoxid, Stearinsäure und Cyclohexylbenzthiazylsulfenamid. Das Granulat und die Ruß-Latex-Dispersion werden sorgfältig miteinander gemischt. Beispielsweise erfolgt die Durchmischung durch Auftrommein in einem genügend großen Gefäß. Nach dem Mischen wird das beschichtete Granulat bei Raumtemperatur oder Temperaturen bis 35° C getrocknet und dann gemäß Beispiel 1 zum erfindungsgemäßen elektrisch leitfähigen Elastomer-Bodenbelag verarbeitet.

## Patentansprüche

1. Verfahren zur Herstellung eines elektrisch leitfähigen Bodenbelags wobei
a) mindestens eine unvulkanisierte Elastomermischung granuliert,
b) Granulatteilchen, die Siebe mit einer Maschenweite zwischen 2 bis 8 mm passieren, mit elektrisch leitfähigen zweiten Partikeln überzogen,
c) in eine Form eingebracht und in einem ersten Pressvorgang bei einem spezifischen Druck von 5 bis 200 bar und einer Temperatur von 60 bis 120°C verdichtet und anvernetzt,
d) in Bahnen oder Platten aufgespalten sowie
e) in einem zweiten Pressvorgang vulkanisiert werden.

2. Verfahren nach Anspruch 1, **dadurch gekennzeichnet, dass** die elektrisch leitfähigen zweiten Partikel auf die granulierten Elastomere aufgetrommelt werden.

3. Verfahren nach Anspruch 1 oder 2, **dadurch gekennzeichnet, dass** die elektrisch leitfähigen zweiten Partikel in Form einer Bindemittel-Dispersion aufgebracht werden.

4. Verfahren nach Anspruch 3, **dadurch gekennzeichnet, dass** ein wässriges Latex-Bindemittel eingesetzt wird.

5. Verfahren nach einem der Ansprüche 1 bis 4, **dadurch gekennzeichnet, dass** verschiedenfarbige, gemusterte oder keilförmig gestreifte Granulatteilchen in statistisch gleichmäßiger Verteilung eingesetzt werden.

6. Verfahren nach einem der Ansprüche 1 bis 5, **dadurch gekennzeichnet, dass** die Vulkanisation im zweiten Pressvorgang bei Temperaturen von 150 bis 190°C bei einem spezifischen Druck von 100 bis 250 bar im Zeitraum von 2 bis 10 Minuten erfolgt.

7. Verfahren nach einem der Ansprüche 1 bis 6, **dadurch gekennzeichnet, dass** leitfähige Substanzen wie Ruße, Graphite, Metallpulver oder leitfähig dotierte mineralische Stoffe mit einer Korngröße < 15 µm eingesetzt werden.

8. Verfahren nach Anspruch 7, **dadurch gekennzeichnet, dass** leitfähig dotierte mineralische Füllstoffe wie mit Antimon-dotiertem Zinnoxid beschichtete Glimmer eingesetzt werden.

9. Elektrisch leitfähiger Bodenbelag hergestellt nach einem der Ansprüche 1 bis 8 aus ersten Partikeln eines polymeren Werkstoffs, die mit elektrisch leitfähigen zweiten Partikeln umhüllt und in dem Zwischenraum zwischen der Ober- und der Unterseite des Bodenbelags verpresst sind, wobei der Bodenbelag zumindest eine Schnittfläche aufweist und die elektrisch leitfähigen zweiten Partikel Leitpfade bilden, die die Oberseite und die Unterseite des Bodenbelages elektrisch leitend verbinden, **dadurch gekennzeichnet, dass** die ersten Partikel aus mindestens einem granulierten Elastomer-Material bestehen und eine vulkanisierte Matrix bilden, in der, die zweiten Partikel entlang der Partikelgrenzen der ersten Partikel elektrische Leitpfade bilden.

10. Bodenbelag nach Anspruch 9, **dadurch gekennzeichnet, dass** er 0,05 bis 0,8 Gew.% der elektrisch leitfähigen zweiten Partikel enthält.

## Claims

1. A process for producing an electrically conductive floor covering, in which
a) at least one unvulcanized elastomeric mixture is granulated,
b) granular particles which pass through sieves having a mesh size in the range from 2 to 8 mm are coated with electrically conductive second particles,
c) are introduced into a mould and compressed and crosslinked in a first pressing operation at a specific pressure in the range from 5 to 200 bar and a temperature in the range from 60 to 120°C,
d) are split into continuous or finite sheets and also
e) are vulcanised in a second pressing operation.

2. A process according to claim 1, **characterized in that** the electrically conductive second particles are tumbled onto the granulated elastomers.

3. A process according to claim 1 or 2, **characterized in that** the electrically conductive second particles are applied in the form of a binder dispersion.

4. A process according to claim 3, **characterized in that** an aqueous latex binder is used.

5. A process according to any one of claims 1 to 4, **characterized in that** it utilizes differently coloured, patterned or wedge-shapedly striped granular particles in statistically uniform distribution.

6. A process according to any one of claims 1 to 5, **characterized in that** the vulcanisation in the second pressing operation is effected at temperatures in the range from 150 to 190°C at a specific pressure in the range from 100 to 250 bar in a time period in the range from 2 minutes to 10 minutes.

7. A process according to any one of claims 1 to 6, **characterized in that** it utilizes conductive substances such as carbon blacks, graphites, metal powders or mineral substances doped to render them conductive and having a particle size < 15 µm.

8. A process according to claim 7, **characterized in that** it utilizes mineral fillers doped to render them conductive such as mica coated with antimony-doped tin oxide.

9. An electrically conductive floor covering produced according to any one of claims 1 to 8 and composed of first particles of a polymeric construction material which are enrobed with electrically conductive second particles and pressed in the interspace between the top and the bottom surface of the floor covering, the floor covering having at least one cut. face and the electrically conductive second particles forming conducting paths which connect the top and bottom surfaces of the floor covering in electro-conducting fashion, **characterized in that** the first particles consist of at least one granulated elastomeric material and form a vulcanised matrix in which the second particles form electrically conducting paths along the particle boundaries of the first particles.

10. A floor covering according to claim 9, **characterized in that** it contains from 0.05% to 0.8% by weight of the electrically conductive second particles.

## Revendications

1. Procédé de fabrication d'un revêtement de sol électroconducteur dans lequel
a) au moins un mélange d'élastomère non vulcanisé est granulé,
b) des particules de granulés, qui passent au travers de tamis d'une ouverture de maille comprise entre 2 et 8 mm, sont revêtues de deuxièmes particules électroconductrices,
c) sont introduites dans un moule pour être comprimées et préréticulées dans une première opération de moulage à une pression spécifique de 5 à 200 bars et à une température de 60 à 120 °C,
d) sont refendues en bandes ou en plaques
e) sont vulcanisées dans une seconde opération de moulage.

2. Procédé selon la revendication 1, **caractérisé en ce que** les deuxièmes particules électroconductrices sont appliquées par tonnelage sur les élastomères granulés.

3. Procédé selon la revendication 1 ou 2, **caractérisé en ce que** les deuxièmes particules électroconductrices sont appliquées sous forme d'un liant à dispersion.

4. Procédé selon la revendication 3, **caractérisé par** la mise en oeuvre d'un liant latex aqueux.

5. Procédé selon l'une des revendications 1 à 4, **caractérisé par** la mise en oeuvre, dans une distribution statistiquement homogène, de particules de granulés à rayures, de différentes couleurs, à motifs ou cunéiformes.

6. Procédé selon l'une des revendications 1 à 5, **caractérisé par le fait que** la vulcanisation s'effectue en l'espace de 2 à 10 minutes dans une seconde opération de moulage à des températures comprises entre 150 et 190 °C et à une pression spécifique comprise entre 100 et 250 bars.

7. Procédé selon l'une des revendications 1 à 6, **caractérisé par** la mise en oeuvre de substances conductrices comme les noirs de carbone, les graphites, la poudre métallique ou des substances minérales dopées de sorte à les rendre conductrices, d'une granulométrie < 15 µm.

8. Procédé selon la revendication 7, **caractérisé par** la mise en oeuvre de charges minérales dopées de sorte à les rendre conductrices, comme des micas revêtus d'oxyde d'étain dopé à l'antimoine.

9. Revêtement de sol électroconducteur fabriqué selon l'une des revendications 1 à 8, constitué de premières particules d'un matériau polymère, enrobées de deuxièmes particules électroconductrices et qui sont moulées par compression dans l'interstice intercalé entre la face supérieure et la face inférieure du revêtement de sol, ce même revêtement de sol présentant au moins une surface de coupe et les secondes particules électroconductrices formant des voies conductrices, qui relient par électroconduction la face supérieure et la face inférieure du revêtement de sol, **caractérisé en ce que** les premières particules sont constituées d'au moins un matériau élastomère granulé et forment une matrice vulcanisée, dans laquelle les secondes particules forment des voies électroconductrices le long des limites particulaires des premières particules.

10. Revêtement de sol selon la revendication 9, **caractérisé en ce qu'**il contient de 0,05 à 0,8 % en poids des deuxièmes particules électroconductrices.
